# FASCICULE DE BREVET EUROPEEN

(11) **EP 3 458 540 B1**
(45) Date de publication et mention de la délivrance du brevet: **13.04.2022**
(21) Numéro de dépôt: 17730839.2
(22) Date de dépôt: 12.05.2017
(51) Int. Cl.: C09K 5/14, C04B 28/14

(54) **MATERIAU A CHANGEMENT DE PHASE POUR LE STOCKAGE D'ENERGIE THERMIQUE, PROCEDE DE FABRICATION ET APPLICATIONS D'UN TEL MATERIAU**
PHASENVERÄNDERLICHES MATERIAL ZUR SPEICHERUNG VON THERMISCHER ENERGIE, HERSTELLUNGSVERFAHREN UND VERWENDUNGEN SOLCH EINES MATERIALS
PHASE-CHANGE MATERIAL FOR STORING THERMAL ENERGY, MANUFACTURING METHOD AND USES OF SUCH A MATERIAL

(30) Priorité: 18.05.2016 FR 1654431
(43) Date de publication de la demande: 27.03.2019
(73) Titulaire: CY Cergy Paris Université, 95000 Cergy (FR)
(72) Inventeur: HARLE, Thibault, 78690 Les Essarts le Roi (FR); LEDESERT, Béatrice, 95830 Cormeilles en Vexin (FR); NGUYEN, Tran Minh Giao, 92700 Colombes (FR); HEBERT, Ronan, 95420 Magny-en-Vexin (FR); MELINGE, Yannick, 95160 Montmorency (FR)
(74) Mandataire: Demulsant, Xavier
(86) Numéro de dépôt international: PCT/FR2017/051153
(87) Numéro de publication internationale: WO 2017/198933

(56) Documents cités:
- CN-A- 1 958 711
- FU XIAOWEI ET AL: "Thermosetting solid-solid phase change materials composed of poly(ethylene glycol)-based two components: Flexible application for thermal energy storage", CHEMICAL ENGINEERING JOURNAL, vol. 291, 3 février 2016 (2016-02-03), pages 138-148, XP029450611, ISSN: 1385-8947, DOI: 10.1016/J.CEJ.2016.01.096 cité dans la demande
- LI ET AL: "Preparation and characterization of cross-linking PEG/MDI/PE copolymer as solid-solid phase change heat storage material", SOLAR ENERGY MATERIALS AND SOLAR CELLS, ELSEVIER SCIENCE PUBLISHERS, AMSTERDAM, NL, vol. 91, no. 9, 13 avril 2007 (2007-04-13) , pages 764-768, XP022027691, ISSN: 0927-0248, DOI: 10.1016/J.SOLMAT.2007.01.011
- CAO Q ET AL: "Hyperbranched polyurethane as novel solid-solid phase change material for thermal energy storage", EUROPEAN POLYMER JOURNAL, PERGAMON PRESS LTD. OXFORD, GB, vol. 42, no. 11, 1 novembre 2006 (2006-11-01), pages 2931-2939, XP028029715, ISSN: 0014-3057, DOI: 10.1016/J.EURPOLYMJ.2006.07.020 [extrait le 2006-11-01] cité dans la demande
- PENG XI ET AL: "Synthesis and thermal energy storage properties of the polyurethane solidsolid phase change materials with a novel tetrahydroxy compound", EUROPEAN POLYMER JOURNAL, PERGAMON PRESS LTD. OXFORD, GB, vol. 48, no. 7, 21 avril 2012 (2012-04-21) , pages 1295-1303, XP028497884, ISSN: 0014-3057, DOI: 10.1016/J.EURPOLYMJ.2012.04.009 [extrait le 2012-04-30] cité dans la demande

## Description

L'invention a trait au domaine technique du stockage de l'énergie thermique, par un matériau à changement de phase.

Les matériaux à changement de phase (par la suite MCP) peuvent être classés selon leur nature chimique : MCP organiques (par exemple paraffines, acides gras, polyalcools), MCP inorganiques (par exemple hydrates salins, sels minéraux, métaux tels que le potassium ou le lithium), MCP eutectiques.

Les MCP peuvent être classés par le type de changement de phase qu'ils subissent, lors d'une variation de température : MCP gazliquide, MCP solide-liquide, MCP solide-gaz, MCP solide-solide.

L'invention se rapporte plus spécifiquement au domaine technique du stockage de l'énergie thermique, par un MCP organique de type solide-solide.

L'invention trouve notamment des applications dans le domaine du bâtiment. L'emploi des MCP dans le bâtiment permet d'amortir et de lisser des fluctuations thermiques à l'intérieur des pièces et de maintenir une température moyenne de confort agréable.

L'emploi des MCP dans le bâtiment permet également de limiter l'augmentation de température, lors du plein ensoleillement, et de fournir de la chaleur à une période moins chaude de la journée, limitant les recours à la climatisation.

L'emploi des MCP dans le bâtiment présente un intérêt important en rénovation et pour les constructions comportant des grandes surfaces vitrées et des murs d'épaisseur réduite, tels que ceux des bâtiments à faible inertie thermique, types constructions bois.

Pour une présentation de l'état de l'art concernant les applications des MCP dans le bâtiment, on peut se reporter, par exemple, aux documents suivants : Kosny, PCM-Enhanced building components, an application of phase change materials in building envelopes and internal structures 2015, ISSN 1619-0181 *;* Sharma et al, Developments in organic solid-liquid phase storage change materials and their applications in thermal energy storage, Energy Conversion and Management, 2015, pp. 193-228 ; Drissi, Développement de nouveaux bétons accumulateurs d'énergie, Thèse Université Paris Est, 2015 *;* Guichard, Contribution à l'étude des parois complexes intégrant des matériaux à changement de phase, Thèse, Université de la Réunion, 2013 *;* Lopez, Méthodologie de conception des matériaux architecturés pour le stockage latent dans le domaine du bâtiment, Thèse, Insa Lyon, 2013*.*

L'invention trouve également des applications dans les domaines de l'automobile, de l'industrie pharmaceutique, de la médecine, de l'électronique, les systèmes énergétiques de chauffage (radiateurs, panneaux thermiques, accumulateurs de chaleur...).

Les MCP les plus employés dans le secteur du bâtiment sont de type solide-liquide, à base de paraffine ou de sels hydratés. Les cires paraffiniques (par exemple tétradécane, hexadécane, octadécane, élicosane) présentent des conductivités thermiques de l'ordre de 0.15 W/m.K et des enthalpies de fusion comprises entre 140 et 250 kJ/kg.

On connait des procédés d'imprégnation de MCP liquide (paraffine, sels), notamment dans du plâtre. L'imprégnation de MCP liquide dans le plâtre présente plusieurs inconvénients. En particulier, cette imprégnation entraîne un changement de couleur et des risques de suintement.

Les MCP à base de paraffine ont de nombreux inconvénients. En particulier, les MCP à base de paraffine présentent des conductivités thermiques faibles, sont inflammables, et voient leur volume varier lors de leur changement d'état.

Pour tenter de pallier ces inconvénients, les MCP à base de paraffine sont encapsulés, notamment pour leur incorporation dans des matériaux de construction comme le plâtre ou le béton.

Selon une première technique connue, les MCP solide-liquide sont macro-encaspulés, c'est-à-dire conditionnés dans des conteneurs dont le volume peut varier du millilitre à plusieurs litres, en fonction des applications visées. Ces conteneurs sont par exemple des sacs, plaques ou feuilles en matériau polymère, ou des balles en matériau métallique inoxydable.

Selon une deuxième technique connue, les MCP solide-liquide sont micro-encapsulés, la taille des microcapsules variant typiquement de un micron à un millimètre. Les microcapsules sont habituellement en matériau polymère, d'origine naturelle, hémisynthétique ou synthétique. La micro-encapsulation est obtenue par exemple par polymérisation interfaciale ou par nébulisation séchage (spray drying). Le procédé de nébulisation séchage implique la formation d'une solution, suspension ou émulsion contenant un polymère et le MCP, un aérosol étant formé par nébulisation par une buse pneumatique, ultrasonore ou rotative. Lors de cette nébulisation, les microcapsules solides se forment après évaporation dans une chambre de dessiccation, à l'aide d'un flux d'air ou d'azote. Pour une présentation générale des techniques de micro-encapsulation, on peut se reporter, par exemple, au document *Rosa et al, http:*//*dx.doi.org*/*10.5772*/*50206, ou au document* Su et al, Review of solid-liquid phase change materials and their encapsulation technologies, Renewable and Sustainable Energy Reviews 2015, pp. 373-391*.*

Les MCP micro-encapsulés sont aujourd'hui largement proposés commercialement dans des matériaux pour la construction de bâtiments ou la rénovation.

La société Dupont propose, sous la dénomination Energain^{®}, des plaques constituées d'un mélange de polymère éthylène/MCP à base de paraffine, enveloppé par deux couches minces d'aluminium. Ces panneaux peuvent être découpés, puis fixés sur les murs par collage, agrafage, ou vissage.

La société Basf propose, sous la dénomination Micronal^{®}, une cire paraffinique micro-encapsulée par du polymétacrylate de méthyle (PMMA). On peut se référer, par exemple, aux documents US 7166355 (BASF, 2007), US 2012/0196116 (BASF, 2012). Plusieurs produits du commerce comprennent un MCP microencapsulé Micronal^{®} de la société BASF dans une matrice gypseuse : Comfortboard de la société Knauf, Thermlacore^{®} de la société National gypsum, Alba balance^{®} de la société Saint Gobain.

Plusieurs fabricants commercialisent du plâtre comprenant des MCP micro encapsulés. La société Weber (groupe Saint Gobain) propose un plâtre à inertie thermique sous l'appellation Weber.mur^{®}. La société Maxit Deutschland Gmbh (groupe Saint Gobain) propose un enduit de plâtre, pour usage intérieur à couche simple, sous l'appellation Maxit-Clima. La société Winco technologies (groupe Winco) propose un revêtement intérieur sous l'appellation Enerciel.

On connait également divers produits composites comprenant des MCP micro-encapsulés (par exemple proposé par la société Rubitherm Gmbh). Des plaques de faux plafonds suspendus comprenant des MCP micro-encapsulés sont proposées par la société Datum phase change Ltd, sous l'appellation Thermacool^{®}. La société Armstrong propose sous la dénomination Coolzone^{®}, des panneaux de faux plafond suspendus comprenant des MCP micro-encapsulés.

L'encapsulation des MCP, largement diffusée commercialement, présente toutefois de nombreux inconvénients.

Lors de la fabrication, notamment par nébulisation séchage, une partie du MCP est perdue, par adhésion sur les parois de l'appareil de production.

Il est par ailleurs nécessaire, lors de la micro-encapsulation, de mettre en place une couche étanche (par exemple en PMMA), limitant les risques de fuite du MCP. De plus, le procédé d'encapsulation est très consommateur d'énergie (et qu'il faut consommer deux fois : pour produire le MCP et pour l'encapsuler).

L'intégration de MCP micro-encapsulés dans des matériaux de construction pose de nombreux problèmes.

Les microcapsules ont tendance à s'agglomérer pour former des amas, et peuvent être endommagées lors du mélange avec un matériau cimentaire, par l'effet du cisaillement lors du malaxage, conduisant à une fuite de MCP, notamment une fuite de paraffine, pouvant affecter les propriétés thermiques et mécaniques du matériau cimentaire contenant le MCP micro-encapsulé.

Le suintement des MCP en surface d'un élément de construction, à la suite d'une rupture des microcapsules, peut avoir des effets néfastes sur la qualité de l'air intérieur, et sur la résistance au feu de l'élément de construction. Le développement du premier panneau de type plâtre-paraffine, en France, dans les années 70, a été limité par suite de ces risques d'inflammabilité et de suintement de paraffine. Le suintement a par ailleurs un impact négatif sur l'aspect de l'élément de construction.

Les produits comprenant des MCP micro-encapsulés ne peuvent être soumis à des actions mécaniques (notamment découpe, ponçage, perçage), sans risque d'endommagement des microcapsules, avec libération du MCP.

Pour tenter de pallier ces problèmes, il a été rarement proposé d'employer des MCP solide-solide, sans micro-encapsulation, en lieu et place de MCP solide-liquide micro-encapsulés. Le document FR2575757 propose de mélanger un MCP à transformation solide/solide, de type polyol organique, par incorporation dans une matrice plâtre, pour des applications au bâtiment.

L'invention se rapporte plus spécifiquement au domaine technique du stockage de l'énergie thermique, par un MCP organique de type solide-solide, à base de polyuréthane.

L'emploi de résines polyuréthane comme MCP à transition solide/solide est rarement proposé dans l'art antérieur, voir par exemple le brevet français FR 2309620 (Ciba-Geigy, 1976, page 3 lignes 14-28).

L'emploi des polyuréthanes comme MCP pose en effet de nombreux problèmes, que l'invention a pour objet de résoudre.

Un premier problème est que la synthèse des polyuréthanes est conventionnellement effectuée à partir d'isocyanates, en présence de solvants, avec les effets qui en résultent en termes d'hygiène et sécurité au travail. On peut se référer à titre d'exemple, aux documents CN 101891877, CN 101781394, CN 1958711. Il est ainsi habituel de synthétiser des polyuréthanes à partir de polyisocyanate et de polyol avec emploi de
- N,N Diméthylformamide DMF (voir par exemple Alkan et al, Polyurethane as solid-solid phase change materials for thermal energy storage Solar Energy 86 (2012) pp. 1761-1769; Su et al, A novel solid-solid phase change heat storage material with polyurethane block copolymer structure, Energy Conversion and Management 47 (2006), pp. 3185-3191; Cao et al, Hyperbranched polyurethane as novel solid-solid phase change material for thermal energy storage, European Polymer Journal 42 (2006), pp. 2931-2939*;* Chen et al, Linear polyurethane ionomers as solid-solid phase change materials for thermal energy storage, Solar Energy Materials and solar cells, 130 (2014), pp. 466-476; Xi et al, Synthesis and thermal energy storage properties of the polyurethane solid-solid phase change materials with a novel tetrahydroxy compound, European Polymer Journal, 48 (2012), pp. 1295-1303*,* Peng et al, Solar Energy Materials & Solar Cells, 145 (2016), pp. 238-247, Li et al, Preparation and characterization of cross-linking PEG/MDI/PE copolymer as solid-solid phase change heat storage material, Solar Energy Materials & Solar Cells 91 (2017), pp. 764-768), la fiche toxicologique du N,N Diméthylformamide illustrant une possibilité de toxicité aigüe comme chronique pour l'homme ;
- ou de THF tétrahydrofurane CAS 109-99-9, (voir par exemple Xi et al, Préparation and performance of a novel thermoplastics polyurethane solid-solid phase change materials for energy storage, Solar Energy Materials and solar cells, 102 (2012), pp. 36-43), la fiche toxicologique du THF illustrant une possibilité de toxicité aigüe comme chronique pour l'homme.

Un deuxième problème est que la synthèse des polyuréthanes met conventionnellement en œuvre des polyisocyanates aromatiques (par exemple MDI Di-isocyanate de diphényl méthane), produits qui sont irritants pour les yeux et les voies respiratoires, avec les risques qui peuvent en résulter en cas de réaction incomplète.

Un troisième problème est que la synthèse des polyuréthanes est conventionnellement réalisée à partir de polyisocyanates, en présence de catalyseurs, notamment de type organométalliques, amines, guanidines, carbènes (voir par exemple Fu et al, Thermosetting solid-solid phase change materials composed of polyethylene glycol based two components : flexible application for thermal energy storage, Chemical Engineering Journal 291 (2016), pp. 138-148). Les catalyseurs organométalliques, notamment ceux contenant du mercure, présentent une toxicité établie.

Un quatrième problème est que, lors de la synthèse des polyuréthanes, la réaction des isocyanates avec l'eau produit un acide carbamique très instable, la décomposition de cet acide conduisant à une amine et à un dégagement de dioxyde de carbone :

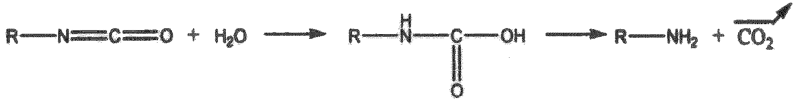

L'amine produite réagit à son tour avec les fonctions isocyanates entraînant la formation de groupements urée :

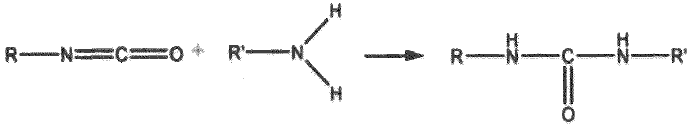

Ainsi, une reprise hydrique en cours de synthèse peut conduire à la formation de bulles restant piégées dans le PU. Une réaction incomplète des isocyanates entraîne par ailleurs un risque, lors du contact du MCP avec un air ambiant humide, d'une production d'urée, dont l'odeur ammoniaquée est désagréable.

Un premier objet est de proposer un matériau à changement de phase, organique, de type solide-solide, à base de polyuréthane, dont la synthèse peut être effectuée sans solvant.

Un deuxième objet est de proposer un matériau à changement de phase, organique, de type solide-solide, à base de polyuréthane, dont la synthèse peut être effectuée sans catalyseur.

Un troisième objet est de proposer un mélange comprenant un tel matériau à changement de phase, organique, de type solide-solide, à base de polyuréthane, et un matériau de construction, tel que ciment, chaux, enduit, ou plâtre, ce mélange pouvant être employé sans risque et sans effet sur la qualité de l'air intérieur.

Un quatrième objet est de proposer des applications d'un tel matériau à changement de phase, organique, de type solide-solide, à base de polyuréthane, notamment dans les domaines du bâtiment, de l'industrie textile, de l'automobile, de l'industrie pharmaceutique, de la médecine, de l'électronique, des systèmes énergétiques de chauffage (radiateurs, panneaux thermiques, accumulateurs de chaleur...).

A ces fins, il est proposé, selon un premier aspect, un procédé de fabrication d'un matériau à changement de phase organique de type solide-solide, à base de polyuréthane, le procédé comprenant :
- une seule étape (i) de synthèse par mélange et réaction d'un polyéthylène glycol liquide, d'un réticulant et d'un polyisocyanate liquide, mis ensemble, par agitation mécanique, à une première température contrôlée, dans une enceinte, pour obtenir le polyuréthane liquide,
- une étape (ii) de cuisson du polyuréthane liquide, à une deuxième température contrôlée, pour rendre le polyuréthane solide,
l'étape (i) de synthèse étant effectuée en l'absence de solvant.

Le polyéthylène glycol liquide fait office à la fois de réactif et de solvant.

Avantageusement, l'étape (i) de synthèse est effectuée sans catalyseur. D'autres aspects de l'invention sont exposés dans les revendications.

D'autres objets et avantages de l'invention apparaîtront à la lumière de la description de modes de réalisation, faite ci-après en référence aux dessins annexés dans lesquels :
- la figure 1 est un diagramme montrant les variations de température d'un composite plâtre/MCP selon un mode de réalisation ;
- la figure 2 est une vue en microscopie électronique à balayage d'un MCP pulvérulent synthétisé, selon un mode de réalisation ;
- la figure 3 est une vue d'un MCP synthétisé, en lame mince et lumière polarisée analysée, le MCP étant porté à 80°C (vue de gauche de la figure 3), et à température ambiante (vue de droite de la figure 3), les couleurs étant transformées en nuances de gris pour les besoins de la reproduction ;
- la figure 4 est une courbe représentant la perte de masse en pourcentage, en fonction de la température en degrés Celsius, pour un polyuréthane à 30% de réticulant ;
- la figure 5 est une vue montrant l'évolution de la température en fonction du temps pour une plaque de polyuréthane témoin, en plâtre, et pour une plaque de mêmes dimensions, en composite plâtre-polyuréthane, ces plaques étant placées dans une enceinte climatique (incubateur) ;
- la figure 6 est une vue montrant les mesures DSC effectuées sur des matériaux composite à matrice plâtre comprenant des MCP.

L'on décrit tout d'abord la synthèse de polyuréthanes thermodurcissables, à partir d'un polyéthylène glycol, avec un réticulant de type HMDI ou glycérol.

Ainsi qu'il apparaitra plus complètement dans la suite de cette description, cette synthèse est avantageusement réalisée sans solvant, et encore plus avantageusement sans solvant et sans catalyseur.

Dans un premier type de synthèse, le glycérol (CAS 56-81-5) est employé comme réticulant. Disposant de trois fonctions hydroxyles, le glycérol permet de ponter trois chaînes en réagissant avec l'HMDI.

Dans un deuxième type de synthèse, l'HMDI joue son rôle d'isocyanate pour la formation des polyuréthanes, et un rôle de réticulant en réagissant avec de l'eau pour former des fonctions amines, qui réagissent ensuite avec les fonctions isocyanate de l'HMDI sec.

Le diisocyanate d'hexaméthylène (HMDI) est également appelé HDI, 1,6-Diisocyanate d'hexaméthylène, 1,6- Diisocyanatohexane. C₈H₁₂N₂O₂/OCN-(CH₂)₆-NCO (CAS 822-06-0)

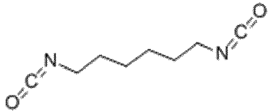

Les polyéthylènes glycols (PEG) sont des polyéthers linéaires de masse molaire inférieure à 20 000 g/mol. Lorsque leur masse molaire est supérieure à 20 000 g/mol, ils sont appelés poly(oxyde d'éthylène) ou poly(oxyéthylène) POE (CAS 25322-68-3). Ils se présentent sous forme solide à température ambiante, dès que leur masse molaire est supérieure à 1000.

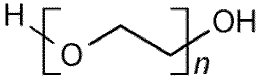

Suivant des exemples de mises en œuvre, trois PEG, de masses molaires 1000g/mol, 1500g/mol et 2000g/mol sont considérés, quatre rapports NCO/OH (0.8, 1, 1.05 et 1.1) ; et trois taux de réticulation sont considérés (20%, 30% et 40%).

L'augmentation du rapport NCO/OH permet, le cas échéant, de compenser la perte d'une partie des fonctions isocyanate initiales par réaction avec de l'humidité.

La taille des cristaux observés dans le polyuréthane est influencée par la valeur du rapport NCO/OH, avec une diminution de la taille de cristaux lorsque le rapport NCO/OH augmente.

La taille des cristaux observés dans le polyuréthane est influencée par la masse molaire du PEG. A titre indicatif, une taille de 10 microns est observée pour un PEG de masse molaire 1000g/mol, une taille de 20 microns est observée pour un PEG de masse molaire 1500g/mol, et une taille de 100 microns est observée pour un PEG de masse molaire 2000 g/mol.

La masse molaire du PEG n'affecte pas sensiblement la température de dégradation des polyuréthanes obtenus, qui restent stables jusqu'à environ 290°C.

La chaleur latente et les températures de transition des polyuréthanes obtenus augmentent lorsque la masse molaire du PEG choisi augmente, ainsi qu'il apparaîtra dans la suite de cette description.

Les pourcentages des taux de réticulation sont calculés à partir de la quantité de fonctions -OH apportées par le PEG, ainsi pour n fonctions OH du PEG, il sera ajouté 0,2n ou 0,4n fonctions OH, via le réticulant. En d'autres termes, le taux de réticulation est la quantité de fonctions hydroxyles apportées par le glycérol, par rapport à la quantité totale de fonctions hydroxyle : [OH] glycérol/ [OH] totale.

Les synthèses sont effectuées sous argon, de sorte à éviter que l'HMDI entre en contact avec l'eau présente dans l'air ambiant.

En lieu et place de l'argon, de l'azote peut être employé, ou un autre gaz neutre. Dans d'autres mises en œuvre, la réaction intervient dans une enceinte placée sous vide.

Avantageusement, les synthèses sont effectuées sous une pression de gaz neutre, en particulier une pression de 1 bar, le gaz neutre étant de l'azote ou de l'argon. La mise en œuvre d'une synthèse sous pression de gaz neutre conduit à une réaction de synthèse quasi complète, ainsi qu'à une augmentation des chaleurs latentes des MCP obtenus.

Le PEG est versé, par exemple, dans un réacteur en verre cylindrique à fond rond, permettant une production de 100 à 500g de PU.

Le réacteur est chauffé, par exemple à l'aide d'un bain d'huile à température contrôlée. La température est maintenue à 70°C.

L'HMDI est introduit en une seule opération dans le réacteur, par exemple à l'aide d'une seringue. Le temps de réaction est court, par exemple de 45 minutes.

L'agitation est assurée par un agitateur mécanique, par exemple de type à hélice trois pales (overhead stirrers, notamment du type proposé par la société IKA).

Le suivi de cinétique de polymérisation peut être effectué, de manière connue en soi, par spectroscopie infrarouge, par transmission ou réflexion, cette technique pouvant être appliquée directement in situ sur un équipement de transformation. Pour une description de ces techniques de suivi, on peut se reporter au document Viale, Etude chemiorhéologique de systèmes thermodurcissables dédiés à la compréhension du procédé de rotomoulage réactif, Thèse INSA Lyon, 2009*.*

Dans une mise en œuvre, la cinétique de réaction est suivie par la décroissance du pic d'isocyanate, à l'aide d'un spectromètre infrarouge à transformée de Fourrier (FTIR). La formation des fonctions uréthanes peut être confirmée par la présence d'un pic correspondant aux fonctions carbonyles, ou d'un pic correspondant aux fonctions N-H.

La viscosité du polyuréthane augmentant avec l'avancement de la réaction, des essais sont effectués afin de disposer d'un polyuréthane encore suffisamment liquide pour être évacué de l'enceinte.

Dans une mise en œuvre, le polyuréthane obtenu est coulé dans des moules en silicone, et est cuit à une température de 100°C environ pendant un temps de quatre heures environ.

Après cette cuisson à l'air, les polyuréthanes sont caractérisés par calorimétrie différentielle à balayage (DSC), permettant de déterminer les températures de transition, ainsi que les chaleurs latente de transition de phase. Une analyse thermogravimétrique est effectuée, afin de déterminer la température de dégradation du MCP, les produits de dégradation étant analysés par infrarouge.

Les polyuréthanes obtenus présentent une micro-séparation entre blocs souples et blocs rigides, avec des transitions réversibles de type ordre/désordre.

Le tableau ci-dessous rassemble des exemples de polyuréthanes synthétisés, l'isocyanate étant l'HMDI, le réticulant étant le glycérol, la colonne % de réticulant indiquant le pourcentage de glycérol employé. Ainsi qu'il apparaît, pour la gamme de rapport [NCO]= NCO/OH considérée, les températures de transition diminuent légèrement et la chaleur latente diminue, lorsque le rapport [NCO] augmente.

| PEG | [NCO] | Taux de réticulant | T fusion °C | T cristallisation °C | Chaleur latente J/g |
|---|---|---|---|---|---|
| 1000 | 1 | 0 | 18 | 25 | 89 |
| 1000 | 1 | 30 | 21 | 23 | 91 |
| 1000 | 1.05 | 0 | 12 | 21 | 72 |
| 1000 | 1.1 | 0 | 14 | 20 | 75 |
| 1500 | 1 | 0 | 31 | 27 | 83 |
| 1500 | 1.05 | 0 | 25 | 21 | 75 |
| 1500 | 1.1 | 0 | 24 | 20 | 75 |
| 1500 | 0.8 | 30 | 33 | 27 | 100 |
| 1500 | 1 | 20 | 27 | 23 | 90/105* P_{Ar}>1bar |
| 1500 | 1 | 30 | 26 | 31 | 82 |
| 1500 | 1 | 40 | 30 | 27 | 90 |
| 1500 | 1.05 | 30 | 22 | 22 | 80 |
| 1500 | 1.1 | 30 | 22 | 21 | 77 |
| 2000 | 1 | 0 | 49 | 29 | 105 |
| 2000 | 1 | 20 | 32 | 25 | 94 |
| 2000 | 1 | 30 | 30 | 30 | 95 |

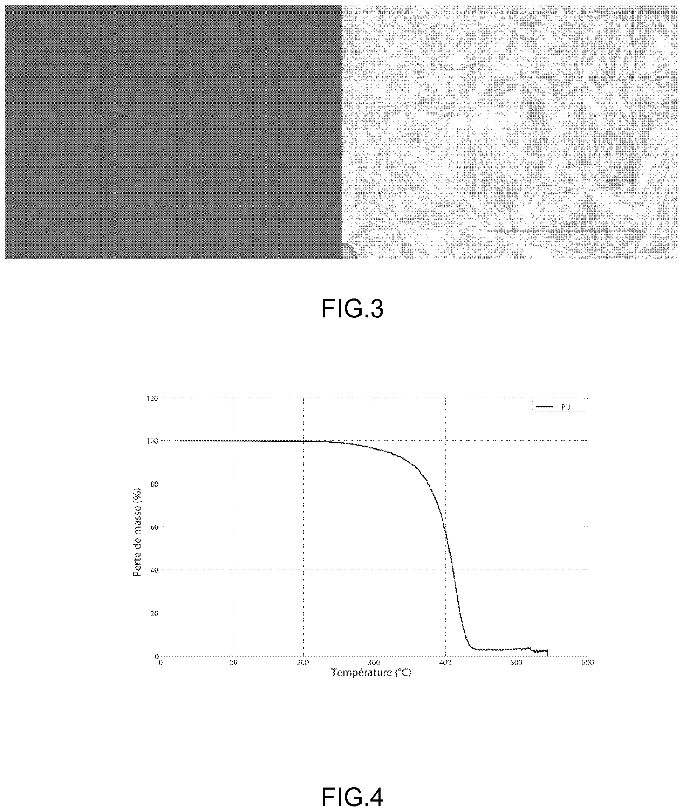

Les analyses thermogravimétriques sont effectuées sur des échantillons de 10mg à une vitesse de chauffe de 20°C/min. La température de dégradation des polyuréthanes synthétisés est de l'ordre de 290°C pour une perte de masse de 5%, et de l'ordre de 424°C pour une perte de masse de 90%. La figure 4 est une courbe représentant la perte de masse en pourcentage, en fonction de la température en degrés Celsius, pour un polyuréthane à 30% de réticulant.

Les analyses DSC sont réalisées à des vitesses de chauffe et refroidissement de 5°C/min. Lors de l'analyse, une première chauffe est réalisée, afin de supprimer l'histoire thermique du matériau.

Ainsi qu'il apparait dans le tableau ci-dessus, des températures de fusion/cristallisation proches de 20°C sont obtenues.

La chaleur latente des polyuréthanes obtenus va de 80J/g à 110J/g, selon la formulation.

L'on décrit maintenant l'association du MCP obtenu, à un liant.

Le polyuréthane obtenu par les synthèses ci-dessus est broyé, puis mélangé au plâtre, et le premix est ensuite gâché avec de l'eau. Avantageusement, le polyuréthane est obtenu à base de PEG de masse molaire 1500 g/mol, avec un rapport [NCO] de 1 et une réticulation de 20% avec du glycérol, ce polyuréthane présentant une dureté Shore D de 30, à 25°C, permettant son broyage pour former une poudre de granulométrie inférieure à 100 microns. La température de fusion de ce polyuréthane est de 27°C et la chaleur latente de transition de phase associée est de 106J/g pour P_{Ar}>1bar.

Le broyage est effectué à l'aide d'un broyeur à couteaux, sans porter le polyuréthane en température.

La poudre obtenue est avantageusement tamisée et présente avantageusement une taille de grains inférieure à 200 microns. Une taille de grains plus élevée conduit à un effet négatif sur la résistance mécanique en compression des mélanges MCP-plâtre.

Le MCP en poudre est mélangé à du plâtre, le pourcentage massique de MCP variant entre 20% et 35%.

Lors du gâchage du matériau composite plâtre/MCP, la quantité d'eau est calculée en fonction du rapport eau/matière sèche, de manière semblable à ce qui est effectué pour un plâtre conventionnel. La prise du composite est légèrement plus lente que celle d'un plâtre conventionnel, probablement en raison du caractère hydrophile du polyuréthane.

Après incorporation du MCP dans le plâtre et séchage du composite, des analyses DSC montrent que le MCP reste capable d'effectuer ses changements de phase, et de stocker de l'énergie dans les mêmes proportions qu'à son état initial.

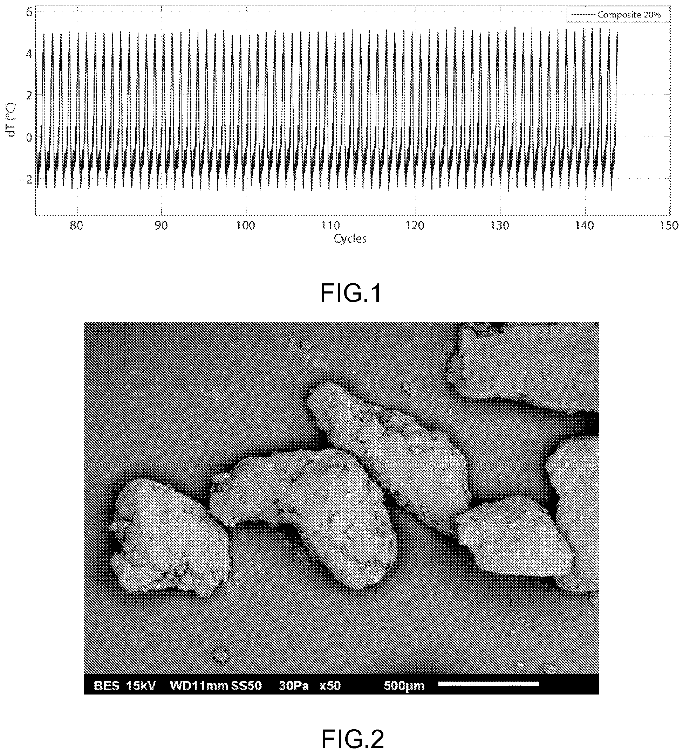

La figure 1 illustre la stabilité des propriétés thermiques d'un composite plâtre/MCP, le pourcentage massique du polyuréthane thermodurcissable dans le plâtre étant de 20. Ainsi qu'il apparait en figure 1, aucune dégradation des propriétés thermiques du composite ne peut être décelée lors de la mise en œuvre de cycles thermiques. Le test de vieillissement est réalisé en enceinte climatique, et les cycles de température sont effectués entre 5°C et 50°C, la figure 1 montrant les différences entre la température de l'enceinte climatique et la température du composite plâtre/MCP, mesurée à cœur de l'échantillon de composite.

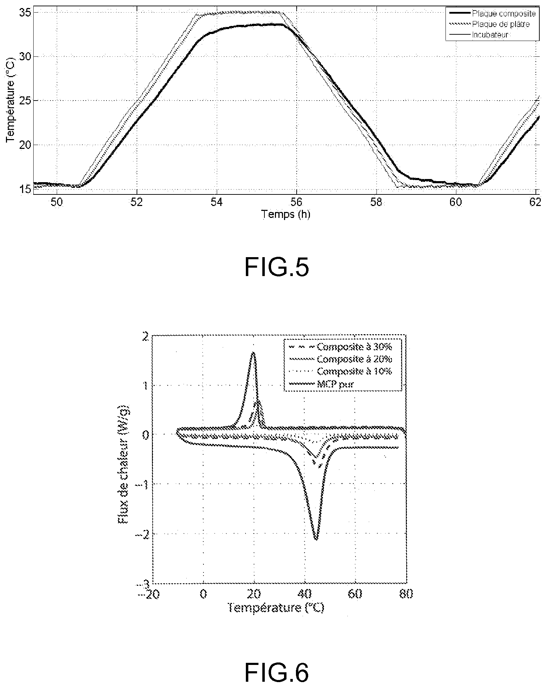

Des mesures de DSC réalisées sur des composites plâtre/MCP et sur le MCP pur montrent que les températures de fusion et de cristallisation des composites et du MCP pur sont similaires. Les chaleurs latentes mesurées sont proches des latentes théoriques. La figure 6 présente des résultats de mesure en DSC, la vitesse de chauffe et de refroidissement étant fixée à 5°C par minute.

| | T° fusion (°C) | T° cristallisation (°C) | Chaleur latente (J/g) |
|---|---|---|---|
| MCP (P_{Ar}<1) | 27+-1 | 23+-1 | 90+-2 |
| Composite 10% | 28+-2 | 24+-1 | 8+-1 |
| Composite 20% | 28+-1 | 24+-1 | 21+-1 |
| Composite 30% | 28+-1 | 24+-1 | 27+-2 |

La figure 5 montre l'évolution de la température en fonction du temps pour une plaque de polyuréthane témoin, en plâtre, et pour une plaque de mêmes dimensions, en composite plâtre-polyuréthane, ces plaques étant placées dans une enceinte climatique (incubateur).

Ainsi qu'il apparait sur la figure 5, la montée en température dans la plaque en composite est plus lente que dans la plaque témoin, et la température maximale atteinte est plus faible, de l'ordre de 2°C environ. Lorsque la température diminue dans l'enceinte climatique, la température diminue plus lentement dans le composite plâtre-polyuréthane que dans la plaque témoin en plâtre. Les plaques témoin et composite sont instrumentées à l'aide d'un même thermocouple, placé à cœur, à mi épaisseur de plaque. Les dimensions des plaques sont de 10cm*10cm*1,3cm et le volume de l'enceinte thermique est de 108 litres, permettant d'assurer l'homogénéité en température de l'environnement, autour des plaques testées.

Le MCP, par sa capacité à changer l'agencement, l'organisation (ordre) de sa chaine carbonée dans un matériau plâtre, permet d'absorber/restituer de l'énergie thermique. Autrement dit, le MCP est soit dans un état cristallisé, dans lequel il est capable d'absorber de l'énergie thermique en se transformant en une phase amorphe dans laquelle l'énergie est stockée. La transition de l'état amorphe à l'état cristallisé se fait en émettant l'énergie thermique précédemment stockée.

Cette capacité est généralisable à tout matériau poreux qui permet au MCP de changer l'agencement, l'organisation de sa chaine carbonée, par exemple, à un matériau poreux tel que du béton, un matériau réfractaire ayant la capacité de prendre de la chaleur.

La longueur des chaines, fonction des PEG utilisés, et la chaleur latente du MCP dictent en grande partie la température de transition. Plus les chaines carbonées du PEG sont longues, plus le MCP prend de la chaleur.

La quantité de réticulant dans les chaines joue aussi. Plus il y a de réticulant dans le MCP, moins les chaines peuvent se déplacer et moins le MCP peut prendre de la chaleur.

Contrairement aux techniques industrielles actuellement mises en œuvre (notamment micro encapsulation, macro encapsulation, imprégnation), le MCP est directement introduit dans le plâtre ou le ciment.

Dans une mise en œuvre avantageuse, un premix est préparé avant gâchage. En d'autres termes, le MCP est incorporé à l'état solide pour former une poudre MCP/plâtre, avant gâchage.

Dans une autre mise en œuvre, le mélange du MCP avec le ciment ou le plâtre est effectué lors du gâchage du plâtre ou du ciment.

Des analyses thermogravimétriques entre 20°C et 700°C, des tests de vieillissement (cycles de 50°C à 5°C, 1°C/min, voir figure 1) et des essais de résistance mécaniques (charge de rupture en compression uniaxiale) ont été effectués sur les produits obtenus. L'ajout du MCP tend à diminuer la résistance à la compression du composite MCP-plâtre, par rapport à un plâtre conventionnel.

Par ailleurs, le MCP apparaît réparti de manière homogène dans le composite.

Le MCP obtenu présente de nombreux avantages.

Le MCP effectue ses transitions de phase dans une gamme de température rencontrée dans les bâtiments d'habitation ou de travail, typiquement entre 20°C et 40°C, et plus particulièrement entre 19°C et 28°C.

Les MCP obtenus offrent des chaleurs latentes de transition de phase significatives, par exemple comprises entre 80 J/g et 120 J/g.

La synthèse du MCP étant avantageusement effectuée sans solvant, voire sans solvant ni catalyseur, l'emploi du MCP a un impact très faible sur la qualité de l'air intérieur, et les risques en matière d'hygiène et sécurité lors de la fabrication ou de la manipulation du MCP sont réduits.

Le choix des réactifs lors de la synthèse permet de faire varier les températures de transition solide-solide, ainsi que la quantité d'énergie stockée, permettant d'obtenir une gamme de MCP.

Le MCP peut être avantageusement directement mélangé, sans encapsulation, à un autre matériau, notamment pour la fabrication d'enduits, de plaques, ou de blocs, en plâtre ou en béton.

Le seul réactif potentiellement dangereux pour la santé humaine est l'isocyanate, totalement neutralisé par l'humidité de l'air ambiant en sortie de fabrication.

Les MCP obtenus ne sont pas totalement solubles dans l'eau, et peuvent être mélangés à un liant, en présence d'eau, et cette propriété est liée à l'ajout du réticulant.

Les MCP obtenus présentent une dureté significative (par exemple dureté Shore D comprise entre 30 et 40, de l'ordre de 40), permettant leur granulation contrôlée, en particulier pour former une poudre de granulométrie comprise entre 100 microns et 300 microns, et cette propriété de dureté est liée à l'ajout du réticulant.

L'emploi du MCP dans les matériaux de construction permet de proposer des produits réduisant les consommations d'énergie (notamment de climatisation ou de chauffage), et d'augmenter le confort thermique en hiver comme en été. Les MCP obtenus trouvent des applications avantageuses pour le confort thermique des constructions à faible inertie thermique comme les constructions en bois, ou des constructions présentant des parois minces et/ou de grandes surfaces vitrées.

L'incorporation directe des MCP obtenus dans une matrice, par exemple un liant hydraulique, sans nécessité d'une encapsulation, réduit fortement les coûts de fabrication.

Les produits composites comprenant le MCP, en dispersion, en couche interne ou en enduit de surface, peuvent être découpés, percés, poncés, sans affecter les propriétés du produit.

Des éléments composites comprenant les MCP peuvent être employés en plaques, par exemple plaques de faux plafond suspendu, ou plaques placées dans le plénum, au-dessus d'un faux plafond suspendu ou d'un faux plafond tendu.

L'ajout des MCP dans une matrice plâtre permet d'obtenir une perte de masse supplémentaire, mesurée lors d'essais thermogravimétriques, vers 400°C. Cette perte de masse génère une consommation de chaleur supplémentaire lors d'un incendie, retardant la dégradation du composite MCP plâtre, par rapport à du plâtre conventionnel.

Les MCP obtenus sont susceptibles d'un grand nombre d'applications et peuvent notamment être employés pour :
- le contrôle thermique et la protection de composants électroniques, les MCP étant par exemple placés directement en couche mince sur le composant ou placés dans un puits de chaleur. De tels emplois trouvent un intérêt particulier dans les installations dans lesquelles la régulation thermique est complexe et couteuse, par exemple les datacentres ;
- le conditionnement de produits médicaux ou de prélèvement ;
- les moteurs à combustion interne, par exemple pour le démarrage de moteurs diesel ;
- l'isolation des conduits de chauffage ou des conduits d'acheminement de fluides ;
- la protection des chaussées contre les dégradations liées au gel ;
- la protection des panneaux solaires contre la chaleur ;
- dans le domaine textile, pour le confort thermique.

## Revendications

1. Procédé de fabrication d'un matériau à changement de phase organique de type solide-solide, à base de polyuréthane, le procédé comprenant :
- une seule étape (i) de synthèse par mélange et réaction d'un polyéthylène glycol liquide, d'un réticulant et d'un polyisocyanate liquide, mis ensemble, par agitation mécanique, à une première température contrôlée, dans une enceinte, pour obtenir le polyuréthane liquide,
- une étape (ii) de cuisson du polyuréthane liquide, à une deuxième température contrôlée, pour rendre le polyuréthane solide,
l'étape (i) de synthèse étant effectuée en l'absence de solvant.

2. Procédé selon la revendication 1, **caractérisé en ce que** le polyisocyanate est linéaire.

3. Procédé selon l'une des revendications 1 à 2, **caractérisé en ce que** le réticulant présente des fonctions uniquement destinées à se fixer sur les liaisons NCO du polyisocyanate.

4. Procédé selon la revendication 3, **caractérisé en ce que** le réticulant présente uniquement des fonctions OH.

5. Procédé selon la revendication 4, **caractérisé en ce que** pour n fonctions OH du polyéthylène glycol, il est ajouté entre 0,2n à 0,4n fonctions OH de réticulant.

6. Procédé selon l'une quelconque des revendications 1 à 5, **caractérisé en ce que** le réticulant est un polyol.

7. Procédé selon l'une quelconque des revendications 1 à 6, **caractérisé en ce que** le réticulant est du glycérol.

8. Procédé selon l'une quelconque des revendications 1 à 7, **caractérisé en ce que** l'étape (i) de synthèse est effectuée sans catalyseur.

9. Procédé selon l'une quelconque des revendications 1 à 8, **caractérisé en ce que** le polyisocyanate est HMDI ou le 1,8-diisocyanatooctane.

10. Procédé selon l'une quelconque des revendications 1 à 9, **caractérisé en ce que** le polyisocyanate est HMDI et le réticulant est du glycérol, et la synthèse est :

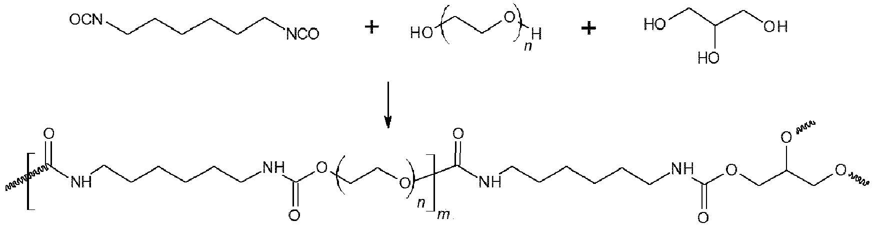

11. Procédé selon l'une quelconque des revendications 1 à 10, **caractérisé en ce que** le rapport NCO/OHₜₒₜₐₗ est compris entre 0,8 et 1.1.

12. Procédé selon l'une quelconque des revendications précédentes, **caractérisé en ce que** la deuxième température contrôlée est comprise entre 100 et 150°C et l'étape de cuisson (ii) dure plusieurs heures.

13. Procédé selon l'une quelconque des revendications précédentes, **caractérisé en ce que** l'étape (i) de synthèse est réalisée sous pression de gaz inerte.

14. Procédé selon la revendication 13, **caractérisé en ce que** la pression de gaz inerte est supérieure à 1 bar.

15. Procédé selon la revendication 13 ou 14, **caractérisé en ce que** le gaz inerte est de l'argon ou de l'azote.

## Patentansprüche

1. Herstellungsverfahren eines Materials mit organischer Phasenänderung vom Typ Feststoff-Feststoff auf Polyurethanbasis, wobei das Verfahren umfasst:
- einen einzigen Syntheseschritt (i) per Mischung und Reaktion einer Polyethylenglykol-Flüssigkeit, eines Vernetzungsmittels und einer Polyisocyanat-Flüssigkeit, die per mechanischem Rütteln bei einer ersten kontrollierten Temperatur in einer Einfassung zusammengebracht werden, um die Polyurethan-Flüssigkeit zu erhalten,
- einen Härtungsschritt (ii) der Polyurethan-Flüssigkeit bei einer zweiten kontrollierten Temperatur, um das Polyurethan fest zu machen,
wobei der Syntheseschritt (i) bei Fehlen von Lösungsmittel durchgeführt wird.

2. Verfahren gemäß Anspruch 1, **dadurch gekennzeichnet, dass** das Polyisocyanat linear ist.

3. Verfahren gemäß einem der Ansprüche 1 bis 2, **dadurch gekennzeichnet, dass** das Vernetzungsmittel Funktionen aufweist, die ausschließlich dazu bestimmt sind, sich auf den NCO-Verbindungen des Polyisocyanats zu fixieren.

4. Verfahren gemäß Anspruch 3, **dadurch gekennzeichnet, dass** das Vernetzungsmittel ausschließlich OH-Funktionen aufweist.

5. Verfahren gemäß Anspruch 4, **dadurch gekennzeichnet, dass** für n OH-Funktionen des Polyethylenglykols zwischen 0,2 n und 0,4 n OH-Funktionen Vernetzungsmittel hinzugefügt werden.

6. Verfahren gemäß irgendeinem der Ansprüche 1 bis 5, **dadurch gekennzeichnet, dass** das Vernetzungsmittel ein Polyol ist.

7. Verfahren gemäß irgendeinem der Ansprüche 1 bis 6, **dadurch gekennzeichnet, dass** das Vernetzungsmittel Glycerol ist.

8. Verfahren gemäß irgendeinem der Ansprüche 1 bis 7, **dadurch gekennzeichnet, dass** der Syntheseschritt (I) ohne Katalysator durchgeführt wird.

9. Verfahren gemäß irgendeinem der Ansprüche 1 bis 8, **dadurch gekennzeichnet, dass** das Polyisocyanat HMDI oder 1,8-Diisocyanatooctan ist.

10. Verfahren gemäß irgendeinem der Ansprüche 1 bis 9, **dadurch gekennzeichnet, dass** das Polyisocyanat HMDI ist und das Vernetzungsmittel Glycerol ist und die Synthese ist:

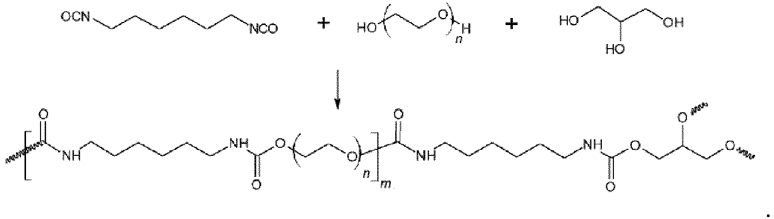

11. Verfahren gemäß irgendeinem der Ansprüche 1 bis 10, **dadurch gekennzeichnet, dass** das Verhältnis NCO/OHₜₒₜₐₗ zwischen 0,8 und 1,1 inbegriffen ist.

12. Verfahren gemäß irgendeinem der voranstehenden Ansprüche, **dadurch gekennzeichnet, dass** die zweite kontrollierte Temperatur zwischen 100 und 150 °C inbegriffen ist und der Härtungsschritt (ii) mehrere Stunden dauert.

13. Verfahren gemäß irgendeinem der voranstehenden Ansprüche, **dadurch gekennzeichnet, dass** der Syntheseschritt (i) unter inertem Gasdruck durchgeführt wird.

14. Verfahren gemäß Anspruch 13, **dadurch gekennzeichnet, dass** der inerte Gasdruck 1 bar übersteigt.

15. Verfahren gemäß Anspruch 13 oder 14, **dadurch gekennzeichnet, dass** das inerte Gas Argon oder Stickstoff ist.

## Claims

1. A process for manufacturing a polyurethane-based solid-solid type, organic phase-change material, the process comprising:
- a single step (i) of synthesising by mixing and reacting a liquid polyethylene glycol, a cross-linking agent and a liquid polyisocyanate, placed together, by mechanical stirring, at a first controlled temperature, into an enclosure, to obtain the liquid polyurethane,
- a step (ii) of curing the liquid polyurethane, at a second controlled temperature, to make the polyurethane solid,
the synthesis step (i) being performed in the absence of a solvent.

2. The process according to claim 1, **characterised in that** the polyisocyanate is linear.

3. The process according to one of claims 1 to 2, **characterised in that** the cross-linking agent has functions only for being attached to NCO linkages of polyisocyanate.

4. The process according to claim 3, **characterised in that** the cross-linking agent only has OH functions.

5. The process according to claim 4, **characterised in that** for n OH functions of polyethylene glycol, from 0.2n to 0.4n OH functions of cross-linking agent are added.

6. The process according to any of claims 1 to 5, **characterised in that** the cross-linking agent is a polyol.

7. The process according to any of claims 1 to 6, **characterised in that** the cross-linking agent is glycerol.

8. The process according to any of claims 1 to 7, **characterised in that** the synthesis step (i) is performed without a catalyst.

9. The process according to any of claims 1 to 8, **characterised in that** the polyisocyanate is HMDI or 1,8-diisocyanatooctane.

10. The process according to any of claims 1 to 9, **characterised in that** the polyisocyanate is HMDI and the cross-linking agent is glycerol, and the synthesis is:

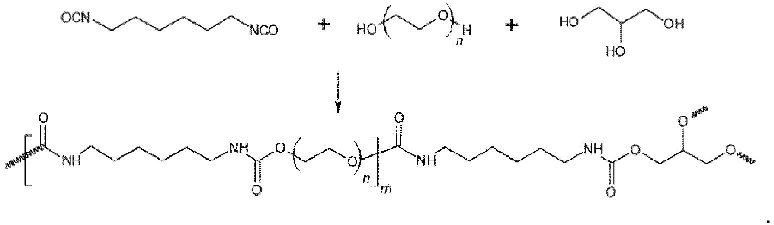

11. The process according to any of claims 1 to 9, **characterised in that** the NCO/OHₜₒₜₐₗ ratio is between 0.8 and 1.1.

12. The process according to any of the preceding claims, **characterised in that** the second controlled temperature is between 100 and 150°C and the curing step (ii) lasts several hours.

13. The process according to any of the preceding claims, **characterised in that** the synthesis step (i) is performed under inert gas pressure.

14. The process according to claim 13, **characterised in that** the inert gas pressure is greater than 1bar.

15. The process according to claim 13 or 14, **characterised in that** the inert gas is argon or nitrogen.
